# EUROPEAN PATENT SPECIFICATION

(11) **EP 3 238 968 B1**
(45) Date of publication and mention of the grant of the patent: **21.11.2018**
(21) Application number: 17161889.5
(22) Date of filing: 20.03.2017
(51) Int. Cl.: B60J 5/10, E05B 83/12, E05C 17/00

(54) **DOOR FIXING APPARATUS FOR HAULERS**
TÜRBEFESTIGUNGSVORRICHTUNG FÜR SCHLEPPER
APPAREIL DE FIXATION DE PORTE POUR CAMIONS

(30) Priority: 27.04.2016 TR 201605495
(43) Date of publication of application: 01.11.2017
(73) Proprietor: Tirsan Treyler Sanayi Ve Ticaret Anonim Sirketi, 54580 Sakarya (TR)
(72) Inventor: ÇOLAKOGLU, Gülsüm Yesim, SAKARYA (TR); TOPÇU, Ilhan, SAKARYA (TR); KELE , Ugur, SAKARYA (TR)
(74) Representative: Yamankaradeniz, Kemal

(56) References cited:
- EP-A1- 2 009 205
- EP-A1- 2 664 735
- EP-A1- 2 878 521
- CN-U- 204 876 941
- FR-A1- 2 764 627

## Description

### Technical Field

The invention is about a door fixing apparatus which enables the doors of haulers, such as trailer, semi-trailer and truck, to be fixed at the desired position and angle when fully opened.

The invention is especially about a door fixing apparatus which prevents downward sliding trend of doors due to their weights after full opening and fixes them at the position in haulers during loading and unloading.

### Known Status of the Technique

Today, the road transportation is the most preferred transportation method. Enabling non-stop access between production and consumption points, providing flexibility for transportation capacity and route, hauling unit loads more easily and faster up to certain distances and being more economic relatively in short distances are just a few of the reasons for preferring road transportation.

It is very important to deliver loads to their destinations without any damage and any impact on their physical and chemical characteristics during transportation. It is also very significant to do loading and unloading from and to haulers such as trailers, semi-trailers and trucks in a practical and safe way without any harm to products and equipment. At this point, doors and door equipment of vehicles which are entrance/exit points for products are very important. There are problems and potential damages during loading and unloading as a result of doors not staying fixed and changing their positions downward due to gravity.

One of the studies performed to solve such problems at these sensitive points is the application EP2385201 A1. The invention is a fixing apparatus intended to lock a vehicle door or cover or similar part at open position and it contains a male fixing part with a locking screw to be fixed on a first vehicle part, a rotary clamp mechanism to be fixed on a second vehicle part into which a locking screw can be inserted and intended to lock inserted locking screw, and a female fixing part with a blocking unit intended to lock the locking screw of rotary clamp mechanism in the locking position. The female fixing part has a push button mechanism to unlock the rotary clamping mechanism. Both male fixing part and female fixing part have a push button mechanism to unlock the rotary clamping mechanism. The lock of rotary clamping mechanism can be unlocked by pressing preferably either first or second push button.

Another study is the Turkish patent application no. 2015/01369. The invention is about the improvement carried out for the doors of trucks, vans and trailers to return the door holders, which help to hold the doors with spring force, to their previous positions without any self-damage. The structure of door holders to hold the doors of trucks, vans and trailers by spring force which is the subject of the invention basically contains a cylindrical body with closed by stopper at one end, at least one spring placed inside and enabling to create an air cushion, seal housing segment, valve spring, body seal, L-shaped lever with a handle on shaft which creates pressure on spring with the valve and a connector on the lever, connection plate and connector seal.

In the known part of the technique, applications of EP2878521A1, CN204876941U, FR2764627A1, EP2009205A1, EP2664735A1 were encountered regarding the issue. All of these applications refer to the structures that provide support to avoid the closing of the door in open position. However, there is no structure that reduces the load on the hinges to which the door is attached, balancing the tendency to move down because of the weight of the door.

These studies we mention do not solve the problem of door position fixing which is our actual problem and occurs during loading/unloading in haulers such as trailer and semi-trailer. Also, no solution has been developed to prevent the door of vehicle approaching to the loading platform to receive a blow.

### Short Description of Invention

The purpose of invention is to provide a new technique unlike current door fixing apparatus with new technical specifications different than known studies and practices.

The primary purpose of the invention is to enable the doors of haulers to be opened with angle of 270° during loading/unloading by keeping doors behind the rear bearing element.

Another purpose of the invention is to prevent the downward sliding trend of doors after full opening due to their weights and to preserve the position.

Another purpose of the invention is to prevent fully opened door moving downward, upward, frontward and backward and to fix it.

Another purpose of the invention is to keep the doors of haulers behind the rear bearing element during loading/unloading and to prevent the damage on door equipment by receiving blow when approaching to loading platform.

The purpose of the invention is to provide a design which can be assembled on and disassembled from vehicle easily and therefore to provide a practical repair and maintenance when required.

Another purpose of the invention is that it is convenient for mass production and provides economical advantages by using preferably metal and derivatives, rubber, wood, plastic and derivatives.

Another purpose of the invention is that it is lighter than current apparatus thanks to its parts used in the production and therefore helps the reduction of total weights of vehicles.

### Figures to Help Understanding the Invention

Fig. 1: General individual view of hauler door.
Fig. 2: General view of side body of hauler.
Fig. 2A: Cross-section assembly view of door fixing apparatus which is the subject of invention.
Fig. 3: Individual general front view of door fixing apparatus which is the subject of invention.
Fig. 3A: Front cross-section view of door fixing apparatus which is the subject of invention.
Fig. 4: Individual general perspective view of door fixing apparatus which is the subject of invention.
Fig. 5: General perspective view of the open assembled version of door fixing apparatus which is the subject of invention.
Fig. 5A: General perspective view of the close assembled version of door fixing apparatus which is the subject of invention.
Fig. 6: General perspective view from left of the door fixing apparatus assembled on hauler.
Fig. 6A: Detailed view of the door fixing apparatus assembled on hauler.

### Part numbers

1 Door
2 Rear bearing element
3 Vehicle frame
4 Door fixing apparatus
4.1 Door connector
4.2 Door handle space
4.3 Retaining element
4.4 Fixing element
4.5 Auxiliary fixing element
4.6 Body connector
4.7 Body connection profile
4.8 Retaining element profile
4.9 Vertical pin
5 Body

### Detailed Description of the Invention

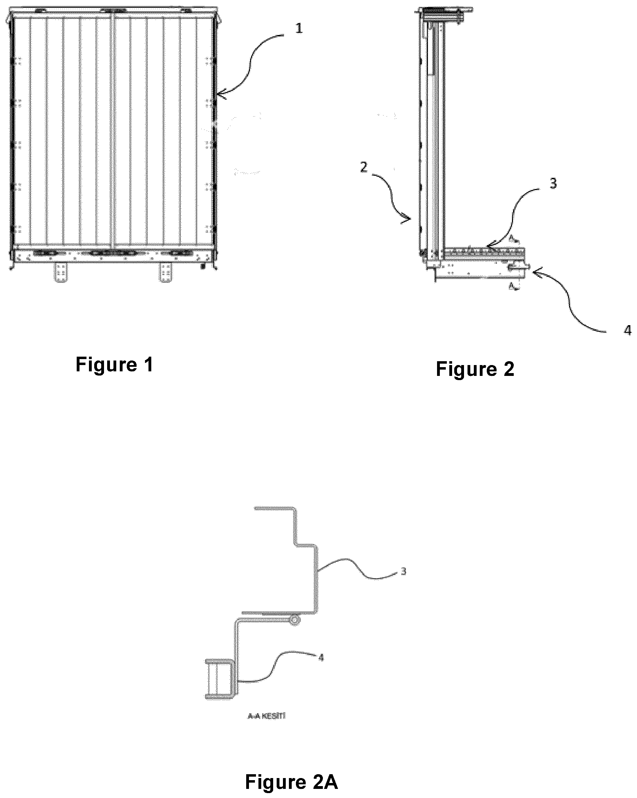

The individual general view of the door (1) of haulers which is opened/closed during loading/unloading process and desired to be stay fixed at desired position is shown in Fig. 1.

The general side view of body (5) assembled on vehicle frame (3) is shown in Fig. 2. It is important for doors (1) of vehicles approaching to loading/unloading ramp not to receive any blow. The hinges and seals of the doors (1), which receive blow, get harm. This poses a problem for hauling. In order to solve this problem, door (1) should be opened fully (270°). In order to do that, door (1) stays behind rear bearing element (2).

The cross-section assembly view of door fixing apparatus (4) which is the subject of the invention is shown in Fig. 2A. The door (1) becoming active during loading/unloading thanks to the door fixing apparatus (4) is fixed at desired position and it is prevented to change its position downward due to its weight and to move upwards, frontward and backward. Also, the door (1) of hauler is prevented to receive blow since it stays behind the rear bearing element (2).

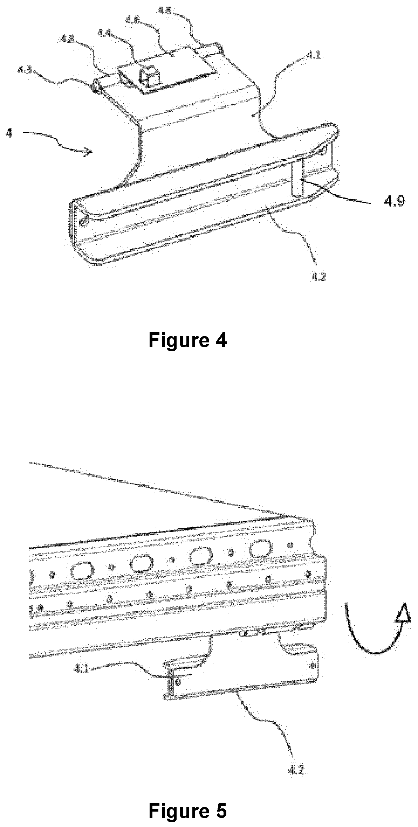

The individual general perspective view of door fixing apparatus (4) which is the subject of the invention is shown in Fig. 4. The door fixing apparatus (4) mentioned has a door connector (4.1) for connection to the door (1) handle, a retaining element (4.3) for the assembly of door connector (4.1) to the body (5), and a pin or different element as retaining element (4.3) which is for easy replacement and maintenance preferably after long-term use. It contains door handle space (4.2) which enables door (1) handle to sit on door connector (4.1) comfortably. It is possible that door handle space (4.2) can be assembled on door connector (4.1) preferably by a mechanic connection either through welding or sealing.

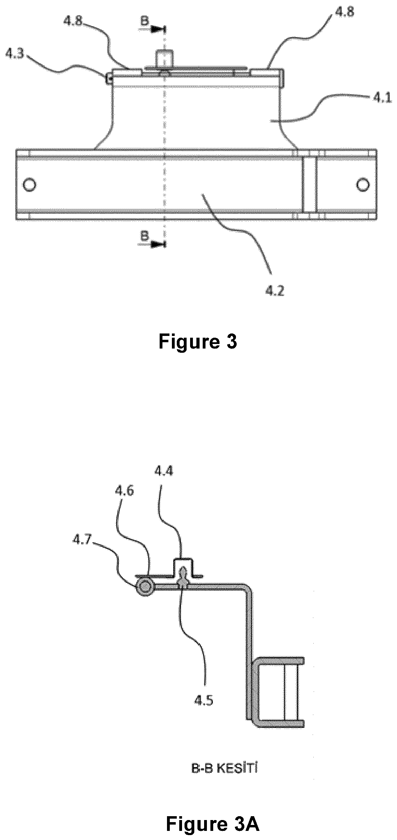

The front cross-section view of door fixing apparatus (4) which is the subject of the invention is shown in Fig. 3A. The door fixing apparatus (4) has a fixing element (4.4) and auxiliary fixing element (4.5) working with fixing element (4.4) compatibly which are used for optional utilization during loading/unloading and keeping it on closed position. It is possible that auxiliary fixing element (4.5) can be assembled on door connector (4.1) preferably by a mechanic connection either through welding or sealing.

For the body connector (4.6) on which the mentioned fixing element (4.4) is assembled, it is possible that the fixing element (4.4) can be assembled on body connector (4.6) preferably by a mechanic connection either through welding or sealing. The door connector (4.1) mentioned contains a body connection profile (4.7). It is possible that the body connector (4.6) can be assembled on body connection profile (4.7) preferably by a mechanic connection either through welding or sealing.

After the body connector (4.6) and body connection profile (4.7) are assembled, it is possible to assembly on the vehicle frame (3) preferably by a mechanic connection either through welding or sealing.

The individual general front view of door fixing apparatus (4) which is the subject of the invention is shown in Fig. 3. There is a retaining element profile (4.8) assembled on door connector (4.1). It is possible that retaining element profile (4.8) can be assembled on door connector (4.1) preferably by a mechanic connection either through welding or sealing. Door handle space (4.2) has a U-shaped concave structure containing a structured vertical pin (4.9) in this U shape. Likewise, this door connector (4.1) has a L-shaped twisted form of whose long side is fixed on the back surface of that U shape.

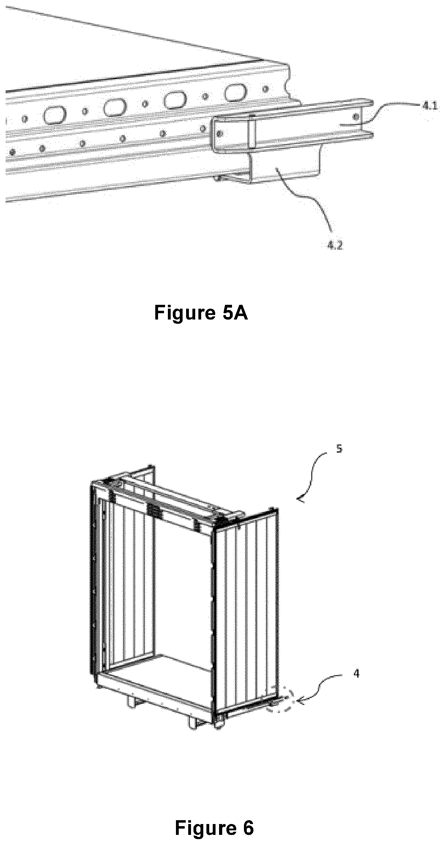

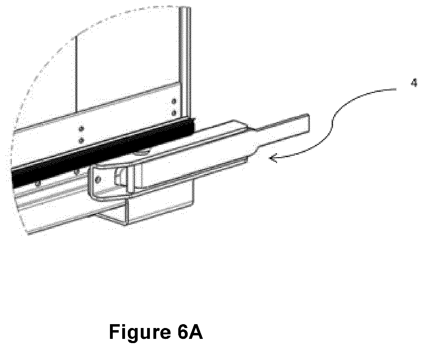

General perspective view from left of the door fixing apparatus (4) assembled on hauler is shown in Fig. 6. It is possible to manufacture this door fixing apparatus (4) by using preferably metal and derivatives, rubber, wood, plastic and derivatives since they are lighter and more economical.

## Claims

1. A door fixing apparatus (4) enabling fully opened door (1) to keep its position and prevent its downward/upward and frontward/backward movement for doors (1) established on rear bearing element (2) assembled on vehicle frame (3) in haulers, the door fixing apparatus (4) comprising:
• A door connector (4.1) ensuring door fixing apparatus (4) to be attached to door (1) handle,
• A retaining element (3) enabling the assembly of door connector (4.1) on a body (5),
• A fixing element (4.4) ensuring the optional use of door fixing apparatus (4) during loading/unloading and keeping it in closed position,
• An auxiliary fixing element (4.5) working with fixing element (4.4) compatibly,
• A body connector (4.6) where fixing element (4.4) mentioned is assembled,
• A body connection profile (4.7) where body connector (4.6) and door connector (4.1) are assembled,
• And a retaining element profile (4.8) assembled on door connector (4.1) mentioned
• **characterized by** door handle space (4.2) for easy seating of the door (1) handle,
which has a U-shaped concave structure containing a structured vertical pin (4.9) in this U shape.

2. The door fixing apparatus (4) according to Claim 1, **characterized in** comprising metal and derivatives, rubber, wood, plastic and derivatives as they are light and economic.

3. The door fixing apparatus (4) according to Claim 1, **characterized in** comprising a pin or different element as retaining element (4.3) which is for easy replacement and maintenance preferably after long-term use.

4. The door fixing apparatus (4) according to Claim 1, **characterized in** comprising retaining element profile (4.8) which is assembled on door connector (4.1) preferably by a mechanic connection either through welding or sealing.

5. The door fixing apparatus (4) according to Claim 1, **characterized in** comprising door handle space (4.2) which is assembled on door connector (4.1) preferably by a mechanic connection either through welding or sealing.

6. The door fixing apparatus (4) according to Claim 1, **characterized in** comprising door connector (4.1) which has a L-shaped twisted form of whose long side is fixed on the back surface of that U shape.

## Patentansprüche

1. Ein Türfeststeller (4), die es ermöglicht, die vollständig geöffnete Tür (1) in ihrer Position zuhalten und ihre nach unten / oben und nach vorne / hinten gerichtete Bewegung für Türen (1) zu verhindern, die an dem am Fahrzeugrahmen (3) montierten hinteren Lager element (2) angebracht sind Schlepper, der Türfeststeller (4) umfassend:
• einenTürverbinder (4,1), der dieBefestigung des Türfeststellers (4) am Türgriff (1) gewährleistet,
• Ein Halteelement (3), das die Montage des Türverbinders (4.1) an einem Körper (5) ermöglicht,
• ein Befestigungselement (4 4), das die optionale Verwendung der Türfeststeller (4) während des Be- und Entladens gewährleistet und sie in geschlossener Position hält,
• ein Hilfsbefestigungselement (4.5), das mit dem Befestigungselement (4.4) kompatibel arbeitet,
• Ein Körperverbinder (4, 6), an dem das erwähnte Befestigungselement (4.4) montiert ist,
• ein Körperverbindungsprofil (4.7), bei dem der Körperverbinder (4.6) und der Türverbinder (4.1) zusammen gebaut sind,
• Und ein Halteelementprofil (4.8) am Türverbinder (4.1) montiert
• gekennzeichnetdurcheinenTürgriffraum (4.2) zum einfachen Aufsetzen des Türgriffs (1), der eine U-förmige konkave Strukturaufweist, die einen strukturierten vertikalen Stift (4.9) in dieser U-Form enthält.

2. Türfeststeller (4) nachAnspruch 1, dadurchgekennzeichnet, dass sie Metall und Derivate, Gummi, Holz, Kunststoff und Derivate enthält, da sie leicht und wirtschaftlich sind.

3. Türfeststeller (4) nachAnspruch 1, **dadurch gekennzeichnet, dass** es als Halteelement (4.3) einen Stift oder ein anderes Element aufweist, das vorzugsweise nach längerem Gebrauch für den einfachen Austausch und die Wartungvorgesehenist.

4. Türfeststeller (4) nach Anspruch 1, **dadurch gekennzeichnet, dass** sie ein Halteelementprofil (4.8) aufweist, dasauf dem Türverbinder (4.1) vorzugsweise durch eine mechanische Verbindung entweder durch Schweißen oder Abdichten montiert wird.

5. Türfeststeller (4) nachAnspruch 1, dadurchgekennzeichnet, dasssieeinenTürgriffraum (4.2) umfasst, der vorzugsweise durch mechanische Verbindung entweder durch Schweißen oder Abdichten am Türverbinder (4.1) montiertwird.

6. Türfeststeller (4) nach Anspruch 1, **dadurch gekennzeichnet, dass** sie einenTürverbinder (4.1) umfasst, der eine L-förmig verdrehte Form aufweist, deren lange Seite auf der Rückfläche dieser U-Form befestigt ist.

## Revendications

1. Un appareil de fixation de porte (4) permettant à la porte complètement ouverte (1) de conserver sa position et d'empêcher son mouvement de descente / montée et d'avance / retour pour des portes (1) mises en place sur l'élément de palier arrière (2) monté sur le châssis (3) du véhicule transporteurs, comprenant :
• Un connecteur de porte (4,1) assurant l'attachement de l'appareil de fixation de porte (4) à la poignée de porte (1),
• Un élément de retenue (3) permettant l'assemblage du connecteur de porte (4.1) sur un corps (5),
• Un élément de fixation (4 4) assurant l'utilisation facultative de l'appareil de fixation de porte (4) pendant le chargement / déchargement et le maintien en position fermée,
• Un élément de fixation auxiliaire (4.5) travaillant avec l'élément de fixation (4.4) de façon compatible,
• Un connecteur de corps (4,6) où l'élément de fixation (4.4) mentionné est assemblé,
• Un profil de connexion de corps (4,7) où le connecteur de corps (4,6) et le connecteur de porte (4.1) sont assemblés,
• Et un profil d'élément de retenue (4.8) monté sur le connecteur de porte (4.1) précité,
• **caractérisé par** un espace de poignée de porte (4.2) pour faciliter la mise en place de la poignée de la porte (1), qui présente une structure concave en forme de U contenant une broche verticale structurée (4.9) dans cette forme en U.

2. L'appareil de fixation de porte (4) selon la revendication 1, **caractérisé en ce qu'**il comprend du métal et des dérivés, du caoutchouc, du bois, du plastique et des dérivés parce qu'ils sont légers et économiques.

3. L'appareil de fixation de porte (4) selon la revendication 1, **caractérisé en ce qu'**il comprend une goupille ou un élément différent en tant qu'élément de retenue (4.3) qui facilite le remplacement et l'entretien, de préférence après une utilisation à long terme.

4. L'appareil de fixation de porte (4) selon la revendication 1, **caractérisé en ce qu'**il comprend un profil d'élément de retenue (4.8) qui est assemblé sur le connecteur de porte (4.1) de préférence par liaison mécanique, soit par soudage soit par scellage.

5. L'appareil de fixation de porte (4) selon la revendication 1, **caractérisé en ce qu'**il comprend un espace de poignée de porte (4.2) qui est monté sur le connecteur de porte (4.1), de préférence par liaison mécanique soit par soudage soit par scellage.

6. L'appareil de fixation de porte (4) selon la revendication 1, **caractérisé en ce qu'**il comprend un connecteur de porte (4.1) qui présente une forme torsadée en L dont le grand côté est fixé sur la surface arrière de cette forme en U.
